# DEMANDE DE BREVET EUROPEEN

(11) **EP 1 647 453 A1**
(43) Date de publication de la demande: **19.04.2006**
(21) Numéro de dépôt: 05292155.8
(22) Date de dépôt: 13.10.2005
(51) Int. Cl.: B60R 21/01, H01Q 1/32

(54) **Ensemble pour véhicule automobile**

(30) Priorité: 13.10.2004 FR 0410821
(71) Demandeur: COMPAGNIE PLASTIC OMNIUM, 69007 Lyon (FR)
(72) Inventeur: Grando, Jérome, 38390 Vertrieu (FR); Virelizier, Francois, 38300 Bourgoin Jallieu (FR)
(74) Mandataire: Remy, Vincent Noel Paul

(57) **Abrégé**

La présente invention concerne une feuille (F) formant un élément d'un capteur pour véhicule automobile, comportant une zone conductrice (18, 20, 40, 42) sur une de ses faces. La feuille comporte une lumière (22) de fixation sur un support. Cette feuille peut constituer un capteur ou une antenne de communication.

L'invention concerne également un ensemble comprenant une telle feuille, une tige d'ancrage (24, 34) dimensionnée pour pouvoir traverser la lumière et un absorbeur de chocs (14, 37) ou un renfort dans lequel la tige d'ancrage peut pénétrer.

## Description

La présente invention concerne un ensemble pour véhicule automobile comprenant une feuille comportant une zone conductrice, une tige d'ancrage, un absorbeur de choc ou un renfort et une peau de pare-chocs.

On connaît déjà, dans l'état de la technique, un capteur agencé à l'avant d'un véhicule automobile et destiné, par exemple, à détecter des obstacles situés à proximité du véhicule. Un tel capteur peut se présenter sous la forme d'une feuille dont les faces sont conductrices de façon à former un capteur capacitif.

On connaît également une antenne de communication, agencée à l'avant du véhicule, reliée à un téléphone intégré dans l'habitable du véhicule. Cette antenne se présente aussi sous la forme d'une feuille avec une face conductrice, capable d'émettre ou de recevoir des ondes électromagnétiques.

Pour ces deux utilisations différentes d'une feuille comportant une zone conductrice, la feuille est généralement fixée à l'intérieur de la peau de pare-chocs par surmoulage ou par collage.

La fixation de la feuille par surmoulage demande de la positionner précisément dans le moule de la peau de pare-chocs, et peut créer des marques visibles sur la face extérieure de la peau, nuisant à l'esthétique du véhicule. En outre, lors du surmoulage, la chaleur peut dégrader la feuille.

La fixation de la feuille par collage demande d'une part de rapporter un matériau supplémentaire sur la peau, la colle, et d'autre part, de mettre en place, lors du montage, un dispositif de positionnement de la feuille sur la peau de pare-chocs.

Dans les deux cas, la fixation de la feuille constituant le capteur ou l'antenne est relativement coûteuse et ralentit le montage du véhicule.

La présente invention vise à remédier à ces inconvénients en facilitant la fixation du capteur ou de l'antenne sur le véhicule.

A cet effet, l'invention a pour objet une feuille pour véhicule automobile, comportant une zone conductrice sur une de ses faces, caractérisée en ce qu'elle comporte une lumière de fixation sur un support.

Ainsi, une telle feuille n'est pas fixée sur le véhicule par surmoulage ou collage, mais grâce à une ou plusieurs lumières la traversant, servant à la fois à la fixation et au positionnement de la feuille sur le véhicule.

De préférence, la feuille comprend un substrat électriquement isolant, comportant deux faces revêtues partiellement ou totalement de zones conductrices.

L'invention concerne également un capteur ou une antenne de communication comprenant une telle feuille.

L'invention a également pour objet un ensemble comprenant une telle feuille et une tige d'ancrage dans le support, dimensionnée pour pouvoir traverser la lumière de la feuille. Ainsi, la tige d'ancrage permet, en traversant la lumière, de fixer le capteur ou l'antenne sur un support.

De préférence, un tel ensemble comporte en outre un absorbeur de chocs, formant le support. La tige d'ancrage constitue alors un moyen de fixation de la feuille sur l'absorbeur.

Il est particulièrement intéressant de pouvoir fixer une telle feuille sur un absorbeur de chocs.

D'une part, cela permet de libérer l'intérieur de la peau de pare-chocs, en évitant d'avoir à agencer un moyen de fixation sur celle-ci, source de retassures.

D'autre part, dans le cas où la feuille forme un capteur, le fait de la fixer sur l'absorbeur de chocs permet d'utiliser un capteur du type capacitif dans un contexte particulièrement intéressant en matière de sécurité, à savoir la surveillance de la déformation de l'absorbeur. En effet, le capteur peut mesurer cette déformation, et déclencher, lorsqu'elle est supérieure à un certain seuil, un système de protection (coussin gonflable), ou bien une alerte au propriétaire du véhicule d'un risque de dégradation de l'absorbeur.

Eventuellement, l'absorbeur est en mousse ou en matière plastique injectée comprenant des nervures.

Selon un autre mode de réalisation, l'ensemble comprend en outre un renfort d'un élément du véhicule, formant le support.

De préférence, l'absorbeur ou le renfort comportent un trou de réception de la tige d'ancrage.

Selon un mode de réalisation préféré de l'invention, l'ensemble comporte également une peau de pare-chocs, la tige d'ancrage étant venue de matière avec la peau de pare-chocs.

La feuille comprise dans l'ensemble défini ci-dessus peut former un élément d'un capteur, notamment capacitif, ou bien un élément d'une antenne de communication du véhicule.

L'invention a enfin pour objet un procédé d'assemblage d'un ensemble selon ce mode de réalisation, l'ensemble comprenant un absorbeur ou un renfort, comportant les étapes suivantes :
- on pré-positionne la lumière de la feuille en regard de la tige d'ancrage ;
- on fixe définitivement la feuille sur la peau en faisant pénétrer la tige d'ancrage dans l'absorbeur ou le renfort.

L'invention sera mieux comprise à la lecture de la description qui va suivre, donnée uniquement à titre d'exemple et faite en se référant aux dessins dans lesquels :
- la figure 1 est un schéma d'un ensemble selon un premier mode de réalisation de l'invention ;
- la figure 2 est un schéma d'un ensemble selon un second mode de réalisation de l'invention ; et
- la figure 3 est un schéma du capteur de la figure 2 selon la direction III-III.

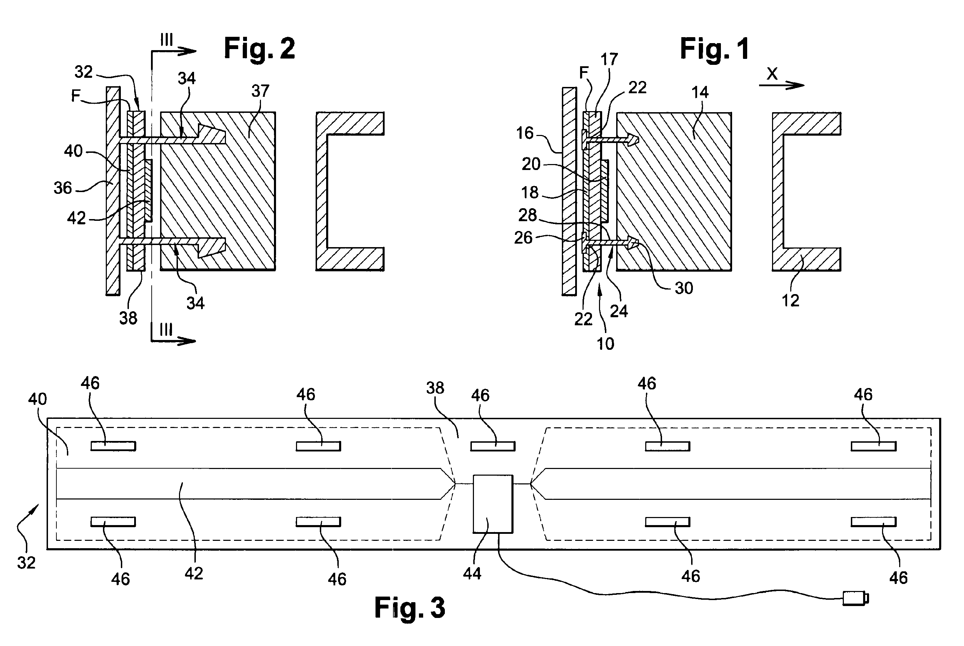

Un capteur 10 selon l'invention est agencé sur un pare-chocs avant d'un véhicule automobile comportant une poutre 12 de pare-chocs, un absorbeur de chocs 14, et une peau de pare-chocs 16, visibles sur la figure 1.

L'absorbeur 14 est en mousse ou en matière plastique injectée, par exemple du polypropylène, comportant des nervures.

Le capteur 10 est de type capacitif et comprend une première armature comportant une feuille F comprenant un substrat 17 électriquement isolant, en matière plastique, muni de deux faces revêtues, partiellement ou totalement, de zones conductrices comprenant une couche 18, 20 de matériau électriquement conducteur. Le capteur 10 comprend une seconde armature connue en soi, par exemple formée par la poutre 12. Les deux armatures sont reliées à un circuit électrique, de façon à délivrer un signal caractéristique du déplacement relatif des deux armures dans la direction X. Si ce déplacement est supérieur à un seuil, un système de traitement du signal (non représenté) est capable de déclencher le déploiement d'un coussin gonflable ou bien une alerte au propriétaire du véhicule, signalant que l'absorbeur 14 peut être endommagé.

Selon un autre mode de réalisation non représenté, la feuille F est une antenne de communication de type GSM, comprenant un substrat isolant avec une zone conductrice, ou bien comprenant une feuille de cuivre. Une telle antenne, traversée par un courant électrique, est capable de recevoir ou d'émettre des ondes électromagnétiques aériennes de façon à faire fonctionner un téléphone du véhicule.

La feuille F comporte des lumières 22 de fixation sur un support, de forme circulaire. Les lumières 22 sont agencées pour recevoir des tiges 24 d'ancrage dans un support, permettant de fixer le capteur 10 sur l'absorbeur de chocs 14.

Les tiges d'ancrage 24 comprennent chacune une tête 26, un axe 28 dimensionné pour pouvoir traverser les lumières 22, et une pointe d'ancrage 30 apte à pénétrer dans l'absorbeur 14. La pointe d'ancrage 34 a une forme trapézoïdale ou en flèche, de façon à pénétrer dans l'absorbeur selon la direction X, sans pouvoir en ressortir.

Pour faciliter le montage du capteur 10 sur l'absorbeur 14, on peut ménager sur celui-ci des trous de réception permettant le pré-positionnement des tiges d'ancrage 22 sur l'absorbeur 14, les pointes d'ancrage 30 s'enfonçant ensuite dans l'absorbeur 14 pour fixer définitivement le capteur 10.

Selon un mode de réalisation non représenté, la feuille selon l'invention est fixée, grâce à la tige d'ancrage, sur un renfort structurel d'un élément du véhicule, par exemple une armature visant à faciliter le montage d'un pare-chocs et sa mise en référence par rapport à toute pièce visible adjacente à la peau de pare-chocs.

Selon un autre mode de réalisation, visible sur la figure 2, un capteur 32 est traversé par des tiges 34 d'ancrage dans un absorbeur 37, venues de matière avec la peau de pare-chocs 36.

Comme on peut le voir sur la figure 3, le capteur 32 est composé d'une feuille F comprenant un substrat isolant 38, une zone conductrice 40 sur une de ses faces (en pointillés sur la figure) et une zone conductrice 42 sur la face opposée. Le capteur 32 est relié à un circuit électrique via un dispositif 44.

Plusieurs lumières de fixation 46, de forme rectangulaire, sont réparties régulièrement sur sa surface, de façon à pouvoir être traversées par des tiges d'ancrage similaires aux tiges 34.

Le montage du capteur 32 sur le pare-chocs consiste à pré-positionner les lumières 46 en regard des tiges 34, puis à fixer définitivement la feuille F sur la peau, en faisant pénétrer les tiges d'ancrage 34 dans l'absorbeur 37.

Grâce à l'invention, les feuilles sont positionnées et fixées de façon simple et rapide sur l'absorbeur, ce qui facilite la fixation d'un capteur ou d'une antenne sur le véhicule.

On notera enfin que la présente invention n'est pas limitée aux modes de réalisation précédemment décrits.

## Revendications

1. Feuille (F) formant un élément d'un capteur pour véhicule automobile, comportant une zone conductrice (18, 20, 40, 42) sur une de ses faces, **caractérisée en ce qu'**elle comporte une lumière (22, 46) de fixation sur un support.

2. Feuille (F) selon la revendication 1, dont la zone conductrice est conformée de façon à être reliée à un circuit électrique.

3. Feuille (F) selon la revendication 1 ou 2, comprenant un substrat (17, 38), électriquement isolant, comportant deux faces revêtues partiellement ou totalement de zones conductrices (18, 20, 40, 42).

4. Capteur (10, 32) pour véhicule automobile, comprenant une feuille selon la revendication 1 ou 2.

5. Ensemble pour véhicule automobile comprenant une feuille (F) selon l'une quelconque des revendications 1 à 3 et une tige (24, 34) d'ancrage dans le support, dimensionnée pour pouvoir traverser la lumière (22, 46) de la feuille.

6. Ensemble selon la revendication 5, comprenant en outre un absorbeur de chocs (14, 37), formant le support.

7. Ensemble selon la revendication 6, dans lequel l'absorbeur (14, 37) est en mousse ou en matière plastique injectée comprenant des nervures.

8. Ensemble selon la revendication 5, comprenant en outre un renfort d'un élément du véhicule, formant le support.

9. Ensemble selon l'une quelconque des revendications 6 à 8, dans lequel l'absorbeur (14, 37) ou le renfort comportent un trou de réception de la tige d'ancrage (24, 34).

10. Ensemble selon l'une quelconque des revendications 5 à 9, comprenant en outre une peau de pare-chocs (36), la tige d'ancrage (34) étant venue de matière avec la peau de pare-chocs.

11. Ensemble selon l'une quelconque des revendications 5 à 10, dans lequel la feuille (F) forme un élément d'un capteur, notamment capacitif, du véhicule.

12. Procédé d'assemblage d'un ensemble selon la revendication 9, l'ensemble comprenant un absorbeur ou un renfort comportant les étapes suivantes :
- on pré-positionne la lumière (46) de la feuille (F) en regard de la tige d'ancrage (34) ;
- on fixe définitivement la feuille (F) sur la peau en faisant pénétrer la tige d'ancrage (34) dans l'absorbeur (37) ou dans le renfort.
